# EUROPÄISCHE PATENTSCHRIFT

(11) **EP 1 896 301 B1**
(45) Veröffentlichungstag und Bekanntmachung des Hinweises auf die Patenterteilung: **14.04.2010**
(21) Anmeldenummer: 06754198.7
(22) Anmeldetag: 08.06.2006
(51) Int. Cl.: B60R 22/36

(54) **SELBSTSPERRENDER GURTAUFROLLER MIT BEI SEINER BLOCKIERUNG LAGERVERÄNDERLICHEM SPERRGLIED**
SELF-LOCKING BELT RETRACTOR WITH A LOCKING MEMBER THAT CHANGES POSITION DURING BLOCKING
ENROULEUR DE CEINTURE AUTOBLOQUANT A ELEMENT DE BLOCAGE CHANGEANT DE POSITION LORS DU BLOCAGE

(30) Priorität: 29.06.2005 DE 102005030156
(43) Veröffentlichungstag der Anmeldung: 12.03.2008
(73) Patentinhaber: AUTOLIV DEVELOPMENT AB, 447 83 Vargarda (SE)
(72) Erfinder: SVENSSON, Robert, S-513 32 Fristad (SE); ANDERSSON, Bengt, L., S-51631 Dasljöfors (SE); PETTERSSON, Lennart, S-44734 Vargarda (SE); BLOMBERG, Tomas, S-53137 Lidköping (SE); RYDSMO, Erik, S-46695 Sollebrunn (SE); LARSSON, Torbjörn, S-46692 Sollebrunn (SE)
(74) Vertreter: Müller, Karl-Ernst
(86) Internationale Anmeldenummer: PCT/EP2006/005444
(87) Internationale Veröffentlichungsnummer: WO 2007/000226

(56) Entgegenhaltungen:
- DE-U1-202004 009 058
- US-A- 4 497 458
- US-A1- 2004 149 852

## Beschreibung

Die Erfindung betrifft einen selbstsperrenden Gurtaufroller für Sicherheitsgurte, insbesondere in Kraftfahrzeugen, mit einer in einem Gehäuse gelagerten und einen Profilkopf mit wenigstens einem daran radial zwischen einer Ruhestellung und einer Blockierstellung verschwenkbar gelagerten Sperrglied aufweisenden Gurtwelle, wobei der Profilkopf wenigstens eine Ausnehmung zur Aufnahme des darin angeordneten Sperrgliedes aufweist und von einem gehäusefesten Druckring als Blockierwiderlager für das in die Blockierstellung ausgeschwenkte Sperrglied umschlossen ist, und wobei die Lagerung des Sperrgliedes in der Ausnehmung des Profilkopfes eine erste Rotationsachse umfasst, um welche das Sperrglied bis zum die weitere Drehung der Gurtwelle sperrenden Kontakt mit dem Druckring radial ausschwenkbar ist.

Ein selbstsperrender Gurtaufroller mit den vorgenannten Merkmalen ist beispielsweise in der WO 03/082640 wie auch in der US2004/0149852 A1 beschrieben. Hierbei ist an dem Profilkopf der Gurtwelle in zwei zugeordneten, einander gegenüberliegend angeordneten Ausnehmungen jeweils ein Sperrglied zwischen einer Ruhestellung und einer Blockierstellung radial verschwenkbar gelagert, wobei in der in der WO 03/082640 beschriebenen besonderen Ausführungsform das Blockierwiderlager von einem selbst mittels eines gesonderten und für das Verständnis des vorliegenden Gegenstandes nicht erheblichen Mechanismus gehäusefest festzulegenden Druckring gebildet ist. Eine derartige Ausbildung und Lagerung von Sperr- bzw. Kupplungsgliedern ist darüber hinaus in der gattungsfremden DE 199 07 962 A1 eingehender beschrieben. Bei dem in der US2004/0149852 A1 beschriebenen Gegenstand greift ein in einer in der Wellenstirn der Gurtwelle ausgebildeten Ausnehmung gelagertes Sperrglied in eine an der die Gurtwelle umschließenden Gehäuseöffnung ausgebildete Innenverzahnung ein.

Mit einem derartigen Sperrprinzip ist der Nachteil verbunden, dass das Maß des Zahneingriffs und damit die Sicherheit der Blockierung von der Stellung des Sperrgliedes im Augenblick der ersten Berührung seiner Außenverzahnung mit der Blockierkontur des Druckringes abhängig ist. Weiterhin sollen gattungsgemäße Gurtaufroller einen kurzen Blockierweg aufweisen, damit nicht aufgrund eines zu langen Blockierweges ein unerwünscht hohes Maß an Gurtband noch ausgezogen wird. Aus der DE 202004009058 U1 und der US-A-4497458 ist jeweils ein Gurtaufroller bekannt, bei dem die Eindringtiefe eines in eine am Gurtaufrollergehäuse ausgebildete Blockierkontur durch Deformation des Gehäuses bzw. des Sperrgliedes vergrößert wird, um einen kurzen Blockierweg zu bewirken und gleichzeitig ein hohes Maß an Sicherheit der Kraftübertragung im Blockierzustand zu sichern.

Der Erfindung liegt daher die Aufgabe zugrunde, einen selbstsperrenden Gurtaufroller mit den gattungsgemäßen Merkmalen so auszugestalten, dass ein kurzer Blockierweg verwirklicht und gleichzeitig ein hohes Maß an Sicherheit der Kraftübertragung im Blockierzustand sichergestellt ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass sich das Sperrglied zur Vergrößerung der Eindringtiefe in die Blockierkontur des Druckringes anschließend in einer Schwenkbewegung um eine von der ersten Rotationsachse unterschiedliche zweite Rotationsachse in der Ausnehmung des Profilkopfes verlagert.

Mit der Erfindung ist der Vorteil verbunden, dass bei der radialen Ausschwenkbewegung des Sperrgliedes nur ein kurzer Blockierweg bis zu einem ersten, die weitere Drehung der Gurtwelle verhindernden Kontakt des Sperrgliedes mit der Blockierkontur des Druckringes zu überwinden ist. Wirkt im Anschluss daran eine durch die Zugbelastung am Gurtband verursachte größere bzw. ansteigende Kraft über die Gurtwelle auf das in Blockierkontakt mit dem Druckring stehende Sperrglied ein, so kommt es zu einer weiteren Verlagerung des Sperrgliedes in der Ausnehmung des Profilkopfes um eine zusätzliche Rotationsachse, die so angeordnet ist, dass mit der Verlagerung des Sperrgliedes eine Vergrößerung der Eindringtiefe des Sperrgliedes in die Blockierkontur des Druckringes einhergeht. Damit ist die Sicherheit der Kraftübertragung im Blockierzustand gewährleistet. Hierzu ist die Ausbildung des Sperrgliedes mit einer Außenverzahnung zwar hilfreich, aber nicht notwendig; eine an dem Sperrglied ausgebildete Klemmfläche ist ebenso ausreichend.

Hierbei kann in einer Ausführungsform der Erfindung vorgesehen sein, dass das Sperrglied zu seiner Lagerung einen balligen Lageransatz mit einem teilkreisförmigen Umfang aufweist und die Ausnehmung des Profilkopfes einen halbschalenförmigen Lagerbereich mit einer entsprechend teilkreisförmigen Gestalt zur Aufnahme des Lageransatzes des Sperrgliedes aufweist, wobei der Lageransatz des Sperrgliedes in dem Lagerbereich um die erste Rotationsachse drehbar ist.

In einer ersten Ausführungsform der Erfindung kann vorgesehen sein, dass das Sperrglied einen an seinen Lageransatz in Richtung seiner Ausschwenkbewegung anschließenden, ballig mit einem teilkreisförmigen Umfang ausgebildeten Abstützansatz aufweist und dem Abstützansatz in der Ausnehmung des Profilkopfes ein an den Lagerbereich anschließender Abstützbereich mit einer entsprechend teilkreisförmigen Gestalt zugeordnet ist und die bei der Verlagerung des Sperrgliedes wirksam werdende zweite Rotationsachse an dem Abstützansatz des Sperrgliedes ausgebildet ist.

Alternativ kann vorgesehen sein, dass der Lagerbereich der Ausnehmung des Profilkopfes mit einem eine Verlagerung des Lageransatzes des Sperrgliedes in dem Lagerbereich ermöglichenden Spiel ausgebildet ist und die bei der Verlagerung des Sperrgliedes wirksam werdende Rotationsachse an einem mit der Blockierkontur des Druckringes in Eingriffskontakt kommenden Fangzahn des Sperrgliedes gebildet ist.

Zur zusätzlichen Abstützung bei der im Blockierzustand erforderlichen Kraftübertragung ist nach einem Ausführungsbeispiel der Erfindung vorgesehen, dass die in Richtung der Ausschwenkbewegung des Sperrgliedes gelegene Randfläche der Ausnehmung als die Verlagerung des Sperrgliedes innerhalb der Ausnehmung begrenzende Anschlagfläche ausgebildet ist. Dementsprechend kann vorgesehen sein, dass an dem Sperrglied eine in dessen verlagerter Blockierstellung mit der Anschlagfläche der Ausnehmung in Kontakt kommende Stützfläche ausgebildet ist.

Die Kraftübertragung ist in vorteilhafter Weise verbessert, wenn nach einem Ausführungsbeispiel der Erfindung Anschlagfläche der Ausnehmung und Stützfläche des Sperrgliedes jeweils eine zueinander korrespondierende Gestalt zur Herbeiführung eines Formschlusses aufweisen.

Hinsichtlich der Ausbildung der Blockierkontur des Druckringes ist nach einem ersten Ausführungsbeispiel der Erfindung vorgesehen, dass der Druckring als Blockierkontur eine Innenverzahnung zur Aufnahme einer Außenverzahnung des Sperrgliedes aufweist und Innenverzahnung des Druckringes und Außenverzahnung des Sperrgliedes eine korrespondierende Gestalt zur Herbeiführung eines Verzahnungseingriffs aufweisen.

Alternativ kann vorgesehen sein, dass der Druckring an seiner den Profilkopf umschließenden Innenfläche als Blockierkontur eine wellenförmige Kontur aufweist und die Außenverzahnung des Sperrgliedes mit flach ausgebildeten Zähnen ausgebildet ist und Druckring und das in die Blockierstellung ausgeschwenkte Sperrglied in Klemmeingriff miteinander gebracht sind.

Gemäß einem weiteren Ausführungsbeispiel der Erfindung ist alternativ vorgesehen, dass der Druckring an seiner den Profilkopf umschließenden Innenfläche als Blockierkontur eine aufgerauhte Oberfläche aufweist und die Außenverzahnung des Sperrgliedes mit entsprechend flach ausgebildeten Zähnen ausgebildet ist und Druckring und das in die Blockierstellung ausgeschwenkte Sperrglied in Klemmeingriff gebracht sind.

Soweit nach einem Ausführungsbeispiel der Erfindung vorgesehen ist, dass an dem Profilkopf in symmetrischer Anordnung zueinander zwei einander gegenüberliegende Ausnehmungen mit darin gelagerten Sperrgliedern ausgebildet sind, ergibt sich in vorteilhafter Weise ein symmetrischer Aufbau der Blockiereinrichtung.

In der Zeichnung sind Ausführungsbeispiele der Erfindung wiedergegeben, welche nachstehend beschrieben sind. Es zeigen:
- Fig. 1: einen Gurtaufroller mit Gehäuse und darin gelagerter, über Sperrglieder zu blockierender Gurtwelle in einer schematischen Perspektivansicht,
- Fig. 2: die Blockierseite des Gurtaufrollers gemäß Figur 1 in einer Draufsicht bei in der Ruhestellung befindlichen Sperrgliedern,
- Fig. 3: den Gegenstand der Figur 2 bei um die erste Rotationsachse ausgeschwenkten und in anfänglichem Eingriff mit der Blockierkontur des Druckringes stehenden Sperrgliedern,
- Fig. 4: den Gegenstand der Figuren 2 bzw. 3 bei um eine zweite Rotationsachse in Volleingriff mit der Blockierkontur des Druckringes verschwenkten Sperrgliedern,
- Fig. 5: die Blockierseite des Gurtaufrollers in einer Teildarstellung gemäß Figur 2 in einer anderen Ausführungsform.

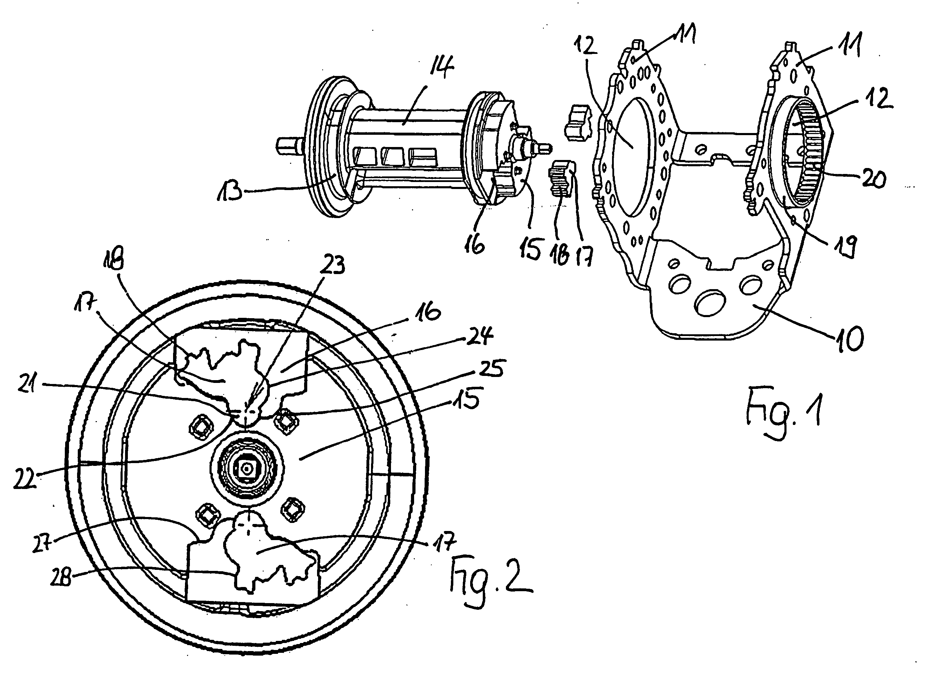

Der in Figur 1 mit einem Teil seiner Bauteile dargestellte selbstsperrende Gurtaufroller hat ein U-förmiges Gehäuse 10, in dessen Seitenschenkeln 11 Lageröffnungen 12 ausgebildet sind, in denen eine Gurtwelle 13 gelagert ist. Die Gurtwelle 13 hat einen Schaft 14 zur Aufnahme eines nicht dargestellten Gurtwickels und an ihrem in Figur 1 rechten Ende einen Profilkopf 15, der bei in dem Gehäuse 10 montierter Gurtwelle 13 in der Ebene eines an dem zugeordneten Seitenschenkel 11 ausgebildeten Druckringes 19 zu liegen kommt. Der Druckring 19 ist an seiner den Profilkopf 15 der Gurtwelle 13 umschließenden Innenfläche mit einer wellenförmigen Blockierkontur 20 versehen. In dem Profilkopf 15 sind zwei einander symmetrisch gegenüberliegende Ausnehmungen 16 angeordnet, in denen jeweils ein Sperrglied 17 zwischen einer Ruhestellung und einer Blockierstellung verschwenkbar gelagert ist, welches eine Außenverzahnung 18 zum Eingriff in die Blockierkontur 20 des Druckringes 19 aufweist.

Wie sich zunächst aus Figur 2 ergibt, weist jedes Sperrglied 17 zu seiner Lagerung einen balligen Lageransatz 21 mit einem teilkreisförmigen Umfang auf, der in einen im Rahmen der Ausnehmung 16 des Profilkopfes 15 ausgebildeten halbschalenförmigen Lagerbereich 22 mit einer entsprechend teilkreisförmigen Gestalt eingreift, so dass das Sperrglied 17 mit seinem in dem Lagerbereich 22 liegenden Lageransatz 21 um eine erste mit 23 bezeichnete Rotationsachse drehbar ist, die bei dem dargestellten Ausführungsbeispiel im Bereich des Lageransatzes 21 ausgebildet ist.

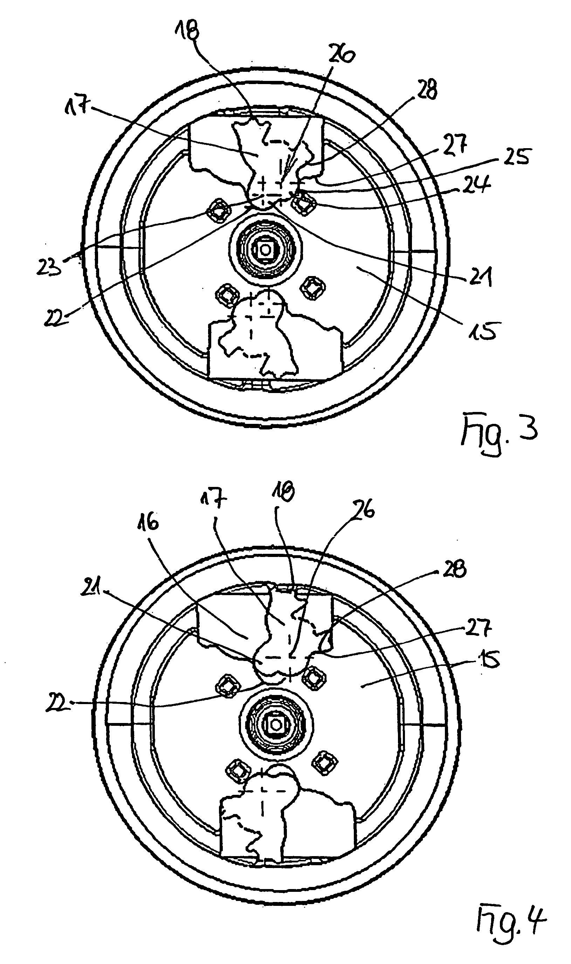

Wie sich zunächst aus Figur 2 weiter ergibt, schließt an den Lageransatz 21 in Richtung der sich aus den Figuren 3 beziehungsweise 4 ergebenden Ausschwenkbewegung ein ebenfalls ballig mit einem teilkreisförmigen Umfang ausgebildeter Abstützansatz 24 an, wobei in der Ausnehmung 16 des Profilkopfes 15 ein an den Lagerbereich 22 anschließender Abstützbereich 25 mit einer entsprechend teilkreisförmigen Gestalt angeordnet ist. Wie sich dazu aus Figur 3 ergibt, kommt beim Ausschwenken des Sperrgliedes 17 um die erste Rotationsachse 23 bis zu einem ersten Eingriff der Außenverzahnung 18 in die zugeordnete Blockierkontur 20 des Druckringes 19 der Abstützansatz 24 des Sperrgliedes 17 in dem Abstützbereich 25 der Ausnehmung 16 des Profilkopfes 15 zu liegen.

Wirken im Zuge dieser Blockierbewegung weiterhin entsprechende Kräfte auf die Gurtwelle, damit auf den Profilkopf 15 und somit auf das daran gelagerte Sperrglied 17 ein, so findet eine weitere Verlagerung des Sperrgliedes 17 um eine im Bereich des Abstützansatzes 24 gelegene zweite Rotationsachse 26 statt, wobei sich der Lageransatz 21 aufgrund eines entsprechend vorgesehenen Lagerspiels aus dem Lagerbereich 22 der Ausnehmung 16 herausbewegt. Die aus Figur 4 ersichtliche Blockierbewegung des jeweiligen Sperrgliedes 17 wird begrenzt durch eine in Richtung der Ausschwenkbewegung des Sperrgliedes 17 gelegene Anschlagfläche 27 als Randfläche der Ausnehmung 16, wobei das Sperrglied 17 eine der Anschlagfläche 27 zugeordnete Stützfläche 28 aufweist. Dabei sind in der Zuordnung Anschlagfläche 27 und Stützfläche 28 derart ausgebildet, dass sich aufgrund einer korrespondierenden Gestalt eine Art Formschluss in der aus Figur 4 ersichtlichen vollständigen Eingriffsstellung des Sperrgliedes 17 mit Außenverzahnung 18 in die Blockierkontur 20 des Druckringes 19 ergibt.

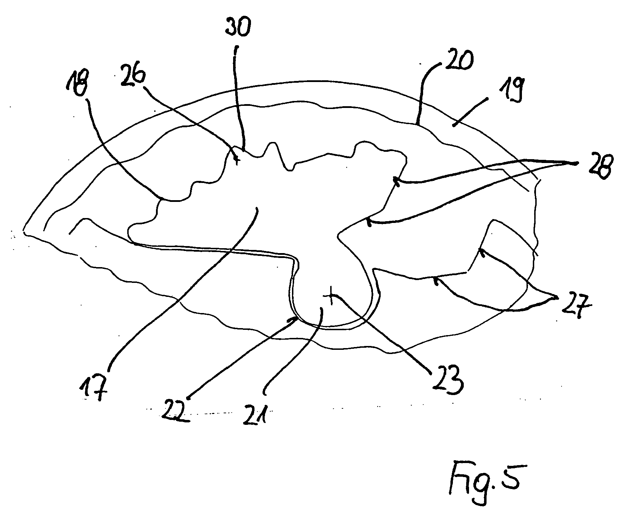

Bei der in Figur 5 dargestellten alternativen Ausführungsform der Erfindung ist die zweite Rotationsachse 26 im Bereich eines bei der Ausschwenkbewegung des Sperrgliedes 17 mit der Blockierkontur 20 des Druckringes 19 zuerst in Kontakt kommenden Fangzahnes 30 ausgebildet, wobei sich eine entsprechende Verlagerung des Sperrgliedes 17 um die zweite Rotationsachse 26 nach dem Eingriff des Fangzahnes 30 in die Blockierkontur 20 ergibt.

Bei den dargestellten Ausführungsbeispielen ist die Blockierkontur 20 des Druckringes 10 als eine wellenförmige Kontur ausgebildet, wobei die Außenverzahnung 18 des Sperrgliedes 17 entsprechend flach ausgebildete Zähne aufweist, so dass sich die Blockierkraft als Klemmkraft darstellt. Wie nicht weiter dargestellt reicht auch eine Ausbildung der entsprechenden Innenfläche des Druckringes 19 als eine aufgerauhte Oberfläche aus, um eine entsprechende Klemmung des Sperrgliedes dagegen herbeizuführen.

Die Erfindung funktioniert jedoch in gleicher Weise mit einer an dem Druckring ausgebildeten Innenverzahnung beziehungsweise einer entsprechend an dem Sperrglied 17 ausgebildeten Außenverzahnung.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Selbstsperrender Gurtaufroller für Sicherheitsgurte, insbesondere in Kraftfahrzeugen, mit einer in einem Gehäuse (10) gelagerten und einen Profilkopf (15) mit wenigstens einem daran radial zwischen einer Ruhestellung und einer Blockierstellung verschwenkbar gelagerten Sperrglied (17) aufweisenden Gurtwelle (13), wobei der Profilkopf (15) wenigstens eine Ausnehmung (16) zur Aufnahme des darin angeordneten Sperrgliedes (17) aufweist und von einem gehäusefesten Druckring (19) als Blockierwiderlager für das in die Blockierstellung ausgeschwenkte Sperrglied (17) umschlossen ist, und wobei die Lagerung des Sperrgliedes (17) in der Ausnehmung (16) des Profilkopfes (15) eine erste Rotationsachse (23) umfasst, um welche das Sperrglied (17) bis zum die weitere Drehung der Gurtwelle (13) sperrenden Kontakt mit dem Druckring (19) radial ausschwenkbar ist, **dadurch gekennzeichnet, dass** sich das Sperrglied (17) zur Vergrößerung der Eindringtiefe in die Blockierkontur (20) des Druckringes (19) anschließend in einer Schwenkbewegung um eine von der ersten Rotationsachse (23) unterschiedliche zweite Rotationsachse (26) in der Ausnehmung (16) des Profilkopfes (15) verlagert.

2. Selbstsperrender Gurtaufroller nach Anspruch 1, **dadurch gekennzeichnet, dass** das Sperrglied (17) zu seiner Lagerung einen balligen Lageransatz (21) mit einem teilkreisförmigen Umfang aufweist und die Ausnehmung (16) des Profilkopfes (15) einen halbschalenförmigen Lagerbereich (22) mit einer entsprechend teilkreisförmigen Gestalt zur Aufnahme des Lageransatzes (21) des Sperrgliedes (17) aufweist, wobei der Lageransatz (21) des Sperrgliedes (17) in dem Lagerbereich (22) um die erste Rotationsachse (23) drehbar ist.

3. Selbstsperrender Gurtaufroller nach Anspruch 2, **dadurch gekennzeichnet, dass** das Sperrglied (17) einen an seinen Lageransatz (21) in Richtung seiner Ausschwenkbewegung anschließenden, ballig mit einem teilkreisförmigen Umfang ausgebildeten Abstützansatz (24) aufweist und dem Abstützansatz (24) in der Ausnehmung (16) des Profilkopfes (15) ein an den Lagerbereich (22) anschließender Abstützbereich (25) mit einer entsprechend teilkreisförmigen Gestalt zugeordnet ist und die bei der Verlagerung des Sperrgliedes (17) wirksam werdende zweite Rotationsachse (26) an dem Abstützansatz (24) des Sperrgliedes (17) ausgebildet ist.

4. Selbstsperrender Gurtaufroller nach Anspruch 1 oder 2, **dadurch gekennzeichnet, dass** der Lagerbereich (22) der Ausnehmung (16) des Profilkopfes (15) mit einem eine Verlagerung des Lageransatzes (21) des Sperrgliedes (17) in dem Lagerbereich (22) ermöglichenden Spiel ausgebildet ist und die bei der Verlagerung des Sperrgliedes (17) wirksam werdende Rotationsachse (26)an einem mit der Blockierkontur (20) des Druckringes (19) in Eingriffskontakt kommenden Fangzahn (30) des Sperrgliedes (17) gebildet ist.

5. Selbstsperrender Gurtaufroller nach einem der Ansprüche 1 bis 4, **dadurch gekennzeichnet, dass** die in Richtung der Ausschwenkbewegung des Sperrgliedes (17) gelegene Randfläche der Ausnehmung (16) als die Verlagerung des Sperrgliedes (17) innerhalb der Ausnehmung (16) begrenzende Anschlagfläche (27) ausgebildet ist.

6. Selbstsperrender Gurtaufroller nach Anspruch 5, **dadurch gekennzeichnet, dass** an dem Sperrglied (17) eine in dessen verlagerter Blockierstellung mit der Anschlagfläche (27) der Ausnehmung (16) in Kontakt kommende Stützfläche (28) ausgebildet ist.

7. Selbstsperrender Gurtaufroller nach Anspruch 6, **dadurch gekennzeichnet, dass** Anschlagfläche (27) der Ausnehmung (16) und Stützfläche (28) des Sperrgliedes (17) jeweils eine zueinander korrespondierende Gestalt zur Herbeiführung eines Formschlusses aufweisen.

8. Selbstsperrender Gurtaufroller nach einem der Ansprüche 1 bis 7, **dadurch gekennzeichnet, dass** der Druckring (19) als Blockierkontur (20) eine Innenverzahnung zur Aufnahme einer Außenverzahnung (18) des Sperrgliedes (17) aufweist und Innenverzahnung des Druckringes (19) und Außenverzahnung (18) des Sperrgliedes (17) eines korrespondierende Gestalt zur Herbeiführung eines Verzahnungseingriffs aufweisen.

9. Selbstsperrender Gurtaufroller nach einem der Ansprüche 1 bis 7, **dadurch gekennzeichnet, dass** der Druckring (19) an seiner den Profilkopf (15) umschließenden Innenfläche als Blockierkontur (20) eine wellenförmige Kontur aufweist und die Außenverzahnung (18) des Sperrgliedes (17) mit flach ausgebildeten Zähnen ausgebildet ist und Druckring (19) und das in die Blockierstellung ausgeschwenkte Sperrglied (17) in Klemmeingriff miteinander gebracht sind.

10. Selbstsperrender Gurtaufroller nach einem der Ansprüche 1 bis 7, **dadurch gekennzeichnet, dass** der Druckring (19) an seiner den Profilkopf (15) umschließenden Innenfläche als Blockierkontur (20) eine aufgerauhte Oberfläche aufweist und die Außenverzahnung (18) des Sperrgliedes (17) mit entsprechend flach ausgebildeten Zähnen ausgebildet ist und Druckring (19) und das in die Blockierstellung ausgeschwenkte Sperrglied (17) in Klemmeingriff gebracht sind.

11. Selbstsperrender Gurtaufroller nach einem der Ansprüche 1 bis 10, **dadurch gekennzeichnet, dass** an dem Profilkopf (15) in symmetrischer Anordnung zueinander zwei einander gegenüberliegende Ausnehmungen (16) mit darin gelagerten Sperrgliedern (17) ausgebildet sind.

## Claims

1. Self-locking belt retractor for seat belts, in particular in motor vehicles, with a belt shaft (13) which is mounted in a housing (10) and has a profiled head (15) with at least one locking member (17) mounted thereon so as to be radially pivotable between a rest position and a blocking position, the profiled head (15) having at least one recess (16) for accommodating the locking member (17) arranged therein and being surrounded by a pressure ring (19) that is attached to the housing and acts as a blocking abutment for the locking member pivoted into the blocking position, the mounting of the locking member (17) in the recess (16) in the profiled head (15) including a first axis of rotation (23), about which the locking member (17) can be radially pivoted until it comes into contact with the pressure ring (19), thereby blocking further rotation of the belt shaft, **characterised in that** in order to increase the penetration depth in the blocking contour (20) of the pressure ring (19), the locking member (17) is next displaced about a second axis of rotation (26) different from the first axis of rotation (23) in a pivoting movement in the recess (16) in the profiled head (15).

2. Self-locking belt retractor according to claim 1, **characterised in that** the locking member (17) has a crowned bearing attachment (21) with a periphery in the form of a circular segment for its mounting and the recess (16) of the profiled head (15) has a bearing zone (22) in the form of a half shell with a corresponding shape in the form of a circular segment to receive the bearing attachment (21) of the locking member (17), the bearing attachment (21) of the locking member (17) being rotatable in the bearing zone (22) about the first axis of rotation (23).

3. Self-locking belt retractor according to claim 2, **characterised in that** the locking member (17) has a crowned support attachment (24) with a periphery in the form of a circular segment adjoining its bearing attachment (21) in the direction of its pivoting movement, and a supporting region (25) with a corresponding shape in the form of a circular segment adjoining the bearing zone (22) is assigned to the support attachment (24) in the recess (16) of the profiled head (15) and the second axis of rotation (26) which comes into effect when the locking member (17) is displaced is formed on the support attachment (24) of the locking member (17).

4. Self-locking belt retractor according to claim 1 or 2, **characterised in that** the bearing zone (22) of the recess (16) of the profiled head (15) is formed with play enabling displacement of the bearing attachment (21) of the locking member (17) in the bearing zone (22) and the axis of rotation (26) which comes into effect when the locking member (17) is displaced is formed on a prong (30) of the locking member (17) coming into engaging contact with the blocking contour (20) of the pressure ring (19).

5. Self-locking belt retractor according to one of claims 1 to 4, **characterised in that** the edge area of the recess (16) located in the pivoting direction of the locking member (17) is formed as the abutment area (27) limiting the displacement of the locking member (17) within the recess (16).

6. Self-locking belt retractor according to claim 5, **characterised in that** a supporting region (28) which comes into contact with the abutment area (27) of the recess (16) is formed on the locking member (17) in the displaced blocking position thereof.

7. Self-locking belt retractor according to claim 6, **characterised in that** the abutment area (27) of the recess (16) and supporting region (28) of the locking member (17) each have a corresponding shape in order to bring about a form closure.

8. Self-locking belt retractor according to one of claims 1 to 7, **characterised in that** the pressure ring (19) has an inner toothing to receive an outer toothing (18) of the locking member (17) as blocking contour (20) and the inner toothing of the pressure ring (19) and outer toothing (18) of the locking member (17) have a corresponding shape to bring about a toothed engagement.

9. Self-locking belt retractor according to one of claims 1 to 7, **characterised in that** the pressure ring (19), on its inner area surrounding the profiled head (15), has an undulating contour as blocking contour (20) and the outer toothing (18) of the locking member (17) is formed with flat-shaped teeth and the pressure ring (19) and the locking member (17) pivoted into the blocking position are brought into clamping engagement with each other.

10. Self-locking belt retractor according to one of claims 1 to 7, **characterised in that** the pressure ring (19) on its inner area surrounding the profiled head (15) has a roughened surface as blocking contour (20) and the outer toothing (18) of the locking member (17) is formed with corresponding flat-shaped teeth and the pressure ring (19) and the locking member (17) pivoted into the blocking position are brought into clamping engagement.

11. Self-locking belt retractor according to claims 1 to 10, **characterised in that** two opposing recesses (16) with locking members (17) mounted therein are formed on the profiled head (15) in symmetrical arrangement to each other.

## Revendications

1. Enrouleur de ceinture autobloquant pour des ceintures de sécurité, en particulier dans des véhicules, avec un arbre de ceinture (13) logé dans un boîtier (10) et présentant une tête profilée (15) avec au moins un élément de blocage (17) logé radialement dessus de manière à pouvoir pivoter entre une position de repos et une position de blocage, la tête profilée (15) présentant au moins un évidement (16) pour le logement de l'élément de blocage (17) disposé dedans et étant entourée par un anneau de pression (19) fixé au boîtier comme butée de blocage pour l'élément de blocage (17) pivoté dans la position de blocage, et le logement de l'élément de blocage (17) dans l'évidement (16) de la tête profilée (15) comportant un premier axe de rotation (23), autour duquel l'élément de blocage (17) peut être pivoté radialement jusqu'au contact bloquant la suite de la rotation de l'arbre de ceinture (13) avec l'anneau de pression (19), **caractérisé en ce que** l'élément de blocage (17) se déplace pour augmenter la profondeur de pénétration dans le contour de blocage (20) de l'anneau de pression (19) ensuite dans un mouvement de pivotement autour d'un second axe de rotation (26) différent du premier axe de rotation (23) dans l'évidement (16) de la tête profilée (15).

2. Enrouleur de ceinture autobloquant selon la revendication 1, **caractérisé en ce que** l'élément de blocage (17) présente pour son logement une saillie de palier (21) convexe avec une périphérie en forme de cercle primitif et l'évidement (16) de la tête profilée (15) présente une zone de palier (22) en forme de demi-coque avec une forme de cercle primitif correspondante pour le logement de la saillie de palier (21) de l'élément de blocage (17), la saillie de palier (21) de l'élément de blocage (17) pouvant être pivotée dans la zone de palier (22) autour du premier axe de rotation (23).

3. Enrouleur de ceinture autobloquant selon la revendication 2, **caractérisé en ce que** l'élément de blocage (17) présente une saillie d'appui (24) contiguë à sa saillie de palier (21) en direction de son mouvement de pivotement, réalisée de manière convexe avec une périphérie en forme de cercle primitif et à la saillie d'appui (24) dans l'évidement (16) de la tête profilée (15) est associée une zone d'appui (25) contiguë à la zone de palier (22) avec une forme de cercle primitif correspondante et le second axe de rotation (26) devenant actif lors du déplacement de l'élément de blocage (17) est réalisé sur la saillie d'appui (24) de l'élément de blocage (17).

4. Enrouleur de ceinture autobloquant selon la revendication 1 ou 2, **caractérisé en ce que** la zone de palier (22) de l'évidement (16) de la tête profilée (15) est réalisée avec un jeu permettant un déplacement de la saillie de palier (21) de l'élément de blocage (17) dans la zone de palier (22) et l'axe de rotation (26) devenant actif lors du déplacement de l'élément de blocage (17) est formé sur une dent d'arrêt (30) de l'élément de blocage (17) venant en contact d'engagement avec le contour de blocage (20) de l'anneau de pression (19).

5. Enrouleur de ceinture autobloquant selon l'une quelconque des revendications 1 à 4, **caractérisé en ce que** la surface de bord placée en direction du mouvement de pivotement de l'élément de blocage (17) de l'évidement (16) est réalisée comme une surface de butée (27) limitant le déplacement de l'élément de blocage (17) dans l'évidement (16).

6. Enrouleur de ceinture autobloquant selon la revendication 5, **caractérisé en ce que** sur l'élément de blocage (17) est réalisée une surface d'appui (28) venant en contact dans sa position de blocage déplacée avec la surface de butée (27) de l'évidement (16).

7. Enrouleur de ceinture autobloquant selon la revendication 6, **caractérisé en ce que** la surface de butée (27) de l'évidement (16) et la surface d'appui (28) de l'élément de blocage (17) présentent chacune une forme correspondante l'une à l'autre pour entraîner une liaison à complémentarité de formes.

8. Enrouleur de ceinture autobloquant selon l'une quelconque des revendications 1 à 7, **caractérisé en ce que** l'anneau de pression (19) présente en tant que contour de blocage (20) une denture intérieure pour le logement d'une denture extérieure (18) de l'élément de blocage (17) et la denture intérieure de l'anneau de pression (19) et la denture extérieure (18) de l'élément de blocage (17) présentent une forme correspondante pour entraîner un engrènement.

9. Enrouleur de ceinture autobloquant selon l'une quelconque des revendications 1 à 7, **caractérisé en ce que** l'anneau de pression (19) présente sur sa surface intérieure entourant la tête profilée (15) en tant que contour de blocage (20) un contour ondulé et la denture extérieure (18) de l'élément de blocage (17) est réalisée avec des dents réalisées de manière plate et l'anneau de pression (19) et l'élément de blocage (17) pivoté dans la position de blocage sont amenés en engagement de serrage l'un avec l'autre.

10. Enrouleur de ceinture autobloquant selon l'une quelconque des revendications 1 à 7, **caractérisé en ce que** l'anneau de pression (19) présente sur sa surface intérieure entourant la tête profilée (15) en tant que contour de blocage (20) une surface rugueuse et la denture extérieure (18) de l'élément de blocage (17) est réalisée avec des dents réalisées de manière plate en conséquence et l'anneau de pression (19) et l'élément de blocage (17) pivoté dans la position de blocage sont amenés en engagement de serrage.

11. Enrouleur de ceinture autobloquant selon l'une quelconque des revendications 1 à 10, **caractérisé en ce que** deux évidements (16) opposés sont réalisés avec des éléments de blocage (17) logés dedans sur la tête profilée (15) en agencement symétrique l'un par rapport à l'autre.
